Europäisches Patentamt

European Patent Office

Office européen des brevets

(11) Publication number: **0 175 557**
**B1**

(12) **EUROPEAN PATENT SPECIFICATION**

(45) Date of publication of patent specification: **21.02.90**

(21) Application number: **85306524.1**

(22) Date of filing: **13.09.85**

(51) Int. Cl.⁵: **G 06 F 1/00, G 06 F 12/14**

(54) Processing device and method.

(30) Priority: **20.09.84 GB 8423784**

(43) Date of publication of application:
**26.03.86 Bulletin 86/13**

(45) Publication of the grant of the patent:
**21.02.90 Bulletin 90/08**

(84) Designated Contracting States:
**AT BE CH DE FR GB IT LI LU NL SE**

(56) References cited:
**EP-A-0 084 441**
**EP-A-0 128 672**
**DE-A-3 023 427**

(73) Proprietor: **Fifield, Kenneth John**
**11 St. Martins Close**
**Epsom, Surrey (GB)**

(72) Inventor: **Fifield, Kenneth John**
**11 St. Martins Close**
**Epsom, Surrey (GB)**

(74) Representative: **Skone James, Robert Edmund et al**
**GILL JENNINGS & EVERY 53-64 Chancery Lane London WC2A 1HN (GB)**

Courier Press, Leamington Spa, England.

## Description

The invention relates to the processing of computer programs and in particular the production of software packages from unlicensed duplication.

It is becoming increasingly important to prevent the unlicensed duplication of commercial software by both amateurs and professional copiers. Most software is sold stored on disc or cassette media and various attempts have been made in the past to prevent unauthorised copying of programs stored in this way. However, expert users have devised counters to most of these protective methods and there is therefore a need for a new method for protecting software.

EP—A—0084441 discloses the use of an auxiliary component which contains a unique, fixed serial number. A computer program is fully stored within a main processor which transfers data being generated to the auxiliary unit where the data is compared with a code. If a match is found between the incoming stream of data and the code, further running of the program is blocked. The unique serial number is then transmitted to the main processor and if the serial number matches an expected serial number, the program recommences running. This system does not solve the problem outlined above since the user can monitor the data transferred between the auxiliary unit and the main processor and determine the unique serial number stored in the auxiliary unit.

DE—A—3023427 describes a system for authenticating the user of a data container. The testing station is connected to the data container and is adapted to read identificaion information from a card. This information which includes an encrypted code, is passed to the data container. The data container includes a store which contains a secret key and a code computer which generates from the received card number and the stored secret key certain encrypted information. This encrypted information is then compared with that received from the card and the resultant agreement or non-agreement is signalled to the testing station. Apart from the fact that the encryption algorithm performed by the processor in the data container is secret, this disclosure does not assist in designing a system to prevent the duplication of software since the processor in the testing station simply requires the receipt of a signal indicating agreement to complete the identification process. It is a simple matter for a skilled person to montior the transfer and to detect the form of the agreement signal so that he can replace the data container by his own device which simply generates the agreement signal.

In accordance with one aspect of the present invention, a device for attachment to a main processor comprises at least a store for storing secure data essential for the correct action of a computer program, the store being arranged such that the secure data is unreadable by a user, and the secure data defining at least in part one or more steps of the computer program; a subsidiary processor for carrying out the or each step defined by the secure data and responsive to a step selection signal from the main processor to carry out the selected step or steps; and interface means for enabling data and step selection signals to be received by the device from the main processor and data to be transferred from the device to the main processor whereby the device and the main processor together enable the computer program to run.

This invention avoids the problems of the prior art by arranging for at least one step of the computer program to be permanently stored in the device. This part of the program is never transferred to the main processor and thus cannot be read by the user.

Typically, the main processor will comprise a microcomputer and in general a conventional storage medium such as a magnetic disc or tape will store those steps of the computer program which are carried out by the main processor.

Preferably, the steps of the computer program which are defined by the secure data represent a key part of the software. For example, in a computer program which can be arranged into the so called "top down" form part of the top end of the program could be stored in the device. In this example overall control of the computer program may be provided by the device. The device could also store look-up tables. Other parts of the computer program could define mathematical routines, an initialisation routine, or other data processing routines such as routines for rotating numbers, but testing, or bit alteration. The advantage of placing a key part of the software in the device store is that it becomes very difficult for a user who simply observes the overall operation of the computer program to determine the steps which are carried out within the device.

The device store may comprise a PROM, EPROM, or RAM or may be provided by a battery operated RAM. In this case, the battery will also be provided as part of the device. The interface means may be provided by a conventional serial or parallel link such as a UART.

In many cases, it will be very difficult for a user to determine what the secure data is but in some cases it may be possible by observing the data which is transferred between the main processor and the device to obtain an indication of the secure data. To make this more difficult, it is therefore preferable if the device further comprises decoding means for receiving from the main processor data and an associated program counter, the decoding means being arranged to select particular steps of the computer program defined by the secure data in accordance with the program counter.

In one important arrangement suitable for use with all the examples mentioned above, a serial number may be associated with the device, the decoding means modifying data which it transfers to the main processor in accordance with an algorithm stored in the device, using the serial number. In this arrangement, the main processor will be arranged to decode the transferred data by using the same serial number and an appropriate algorithm. An example of such an algorithm is a logical operation such as an Exclusive-OR operation or like encoding operation.

The advantage of using a serial number is that the device and associated software which is loaded into the main processor can be initialised with the same serial number so that the associated software will only work with the particular device. If the associated software is then duplicated it will not operate with another device having a different serial number. Conversely, if the device is used on associated software derived from another source, it will also not work because the serial numbers will not be the same.

The serial number may be provided in the device when the device is manufactured or it could be initialised when the device is sold by a dealer to a user.

It is important that the secure data is unreadable and this may be achieved if the various parts of the device are mounted in a secure container to prevent the store from being analysed. This security can be achieved by immersing the components in epoxy resin or a multilayer potting material which is preferably acid resistant and heat resistant up to about 150°C. This will mean that if someone tries to gain access to the store it is very likely that the store will be damaged when attempts are made to remove the potting material.

Another method for making the container secure is to use a battery operated RAM instead of the more usual EPROM and to arrange the circuit containing the RAM and battery in such a way that it will be broken when anyone tries to gain access to the container. Once the circuit is broken the contents of the RAM will be irretrievably lost. In one such arrangement, the components of the device may be submerged in potting material such as epoxy resin and the wire connecting the RAM and the battery may be wrapped around the epoxy resin mass, the wrapped product then being itself submerged in potting material and surrounded in a metal case. This arrangement makes it very likely that any attempt to remove the epoxy resin will also sever the wire.

Conveniently, the container comprises a hardened steel case.

In addition, or alternatively, conventional sensors may be provided within the container to sense when attempts are being made to open the container, the sensors causing power to the RAM to be turned off.

In a further arrangement, metal filings may be provided in the potting material to provide additional security against radiation methods of viewing the device store.

In another particularly preferable arrangement the components of the device are incorporated on a semiconductor chip held in a thin card such as a so-called "smart" card which is a card having dimensions similar to a credit card.

In accordance with a second aspect of the present invention, a method for operating a main processor connected to a device in accordance with the first aspect of the invention comprises determining when a step in the computer program is to be found in the device; passing data and a program counter identifying the next step to the device; causing the subsidiary processor to carry out the step or steps indicated by the program counter on the transferred data; and passing resultant data and a new program counter to the main processor, the new program counter indicating the next step or steps of the computer program to be carried out by the main processor.

To make it more difficult for a user to understand the operation of the overall computer program, the data transferred between the device and the main processor may include dummy data which is ignored by the respective one of the main and subsidiary processors when carrying out the indicated step or steps of the computer program and preferably the dummy data is changed between each transfer. This makes it even more confusing for an observer.

As has previously been mentioned, the data transferred between the device and the main processor may be coded by using an algorithm based on a serial number unique to the device in the main processor to provide added security.

There are many situations in which the invention may be applied. For example, in any data transfer system, for example satellite communication as well as more common applications where duplication of a computer program is to be prevented. This latter aspect allows not only the sale of programs to be controlled but also the licencing of programs.

An example of a device and a method for its operation in accordance with the present invention will now be described with reference to the accompanying drawings, in which:-

Figure 1 is a block diagram of the device connected to a main processor;

Figure 2 is an enlarged block diagram of the device; and,

Figure 3 is a block diagram of a typical top down program structure.

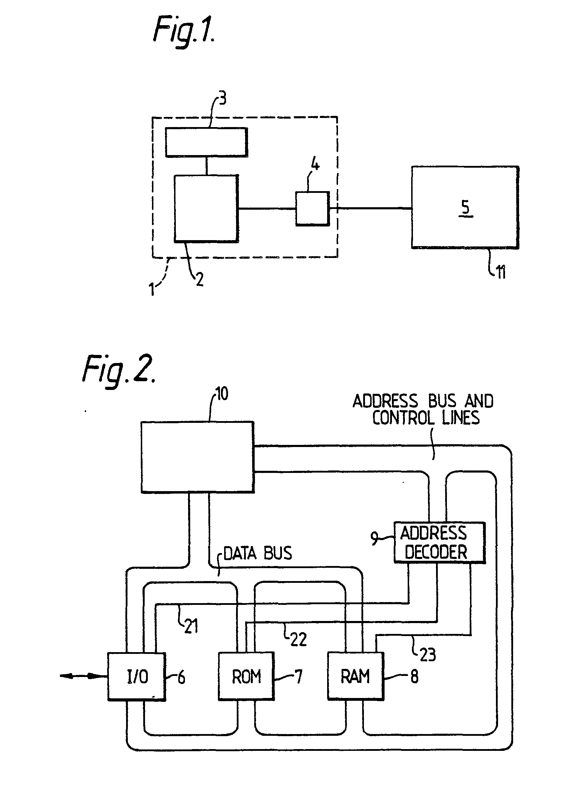

Figure 1 illustrates a main processor unit 1 which may comprise a conventional microcomputer including a central processing unit 2 at least one store 3 and an interface 4. Data to be processed may be input into the main procesor 1 in any conventional way via another interface (not shown) and the data may originate from a manual data input device such as a keyboard or some other data supply such as a disc store.

The main processor unit 1 is connected to an auxiliary device 5 via the interface unit 4. The device 5 is shown in more detail in Figure 2 and comprises a serial or parallel input/output device 6 connected to the unit 4 of the main processor unit 1; a ROM 7; and a RAM 8. In addition, the device 5 includes an address decoder 9 and a microprocessor 10. All the elements 6—10 of the device can be fabricated on a single chip such as Motorola 6801. The microprocessor 10 is connected via a data bus with the input/output device 6, the ROM 7 and the RAM 8 and via an address bus and control lines with the address decoder 9 and the devices 6—8. The address decoder 9 is connected by address lines 21, 22, 23 to the elements 6, 7, 8 respectively in order to control which of the elements is active. The devices 6—10 can be powered remotely or with an internal power source such as a battery (not shown) forming part of the device 5.

In one example, the device 5 is housed in a container 11 made from hardened steel to prevent access being obtained to the components within it.

In addition, the components may be embedded in a suitable potting material such as epoxy resin which will cause the integrated circuits forming the various components to break if the potting material is chipped off or sawn. It is therefore virtually impossible to remove the potting material without destroying the integrated circuits.

In another arrangement the components forming the device 5 may be incorporated into a thin card such as a "smart" card for ease of manufacture and use. A suitable card is manufactured by Flonic of France. In practice, it is very difficult to obtain information from the card such as details of the contents of the memories 7, 8.

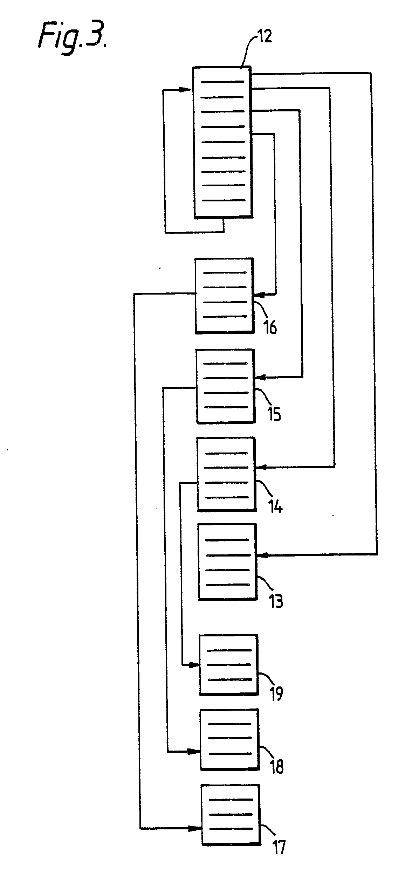

Figure 3 illustrates diagrammatically the structure of a typical top-down program in block diagram form. The program comprises a main organisational routine 12 which oversees the operation of the program. Each step in the main routine 12 causes appropriate ones of an input driver 13, mathematical processor 14, a data processor 15, and other routines such as indicated at 16 to be accessed. These sections of the program themselves access certain subroutines 17, 18 and look-up tables 19. For simplicity only a small number of subroutines and other routines are indicated. Furthermore, it should be understood that many computer programs can be reorganised into the top-down form.

The essence of the invention lies in taking a key part of a particular computer program such as the organisational routine 12 and/or the data processor 15 and storing this in the ROM 7 of the device 5. The remainder of the program including the look-up tables 19, the mathematical processor 14 and the subroutines 17, 18 are stored in the store 3 of the main processor unit 1. The computer program will not operate without the part stored in the ROM 7. In other examples further key parts of the computer program are stored in the ROM 7 and preferably only the subroutines are stored in the main processor unit 1.

During manufacture the secure data (eg. the data processor steps of a computer program) is loaded into the ROM 7. The remainder of the software may be loaded onto disc which accessible to third parties who may read its contents. The contents will, however, be worthless without the (unreadable) contents of the ROM 7.

In use, the main processor 2 carries out steps of the computer program stored in its memory until it determines that the next step in the program is not stored in its memory but is stored in the ROM 7. At this stage, data necessary for the next step or steps to be carried out together with a program counter is transferred from the main processor 2 via the interface 4 to the I/O device 6. The address decoder routes the data in a conventional manner to the RAM 8. The processor 10 determines from the program counter transferred the next step to be carried out and then accesses from the ROM (under control of the address decoder 9) the step or steps indicated by the program counter and carries out these steps on the transferred data. When the step or steps selected have been completed the resultant data together with a new program counter is passed via the I/O device 6 and interface 4 back to the main processor 2.

The main processor 2 then determines from the program counter transferred the next step in the program to be carried out. This process may be repeated a number of times depending upon how often the steps stored in the ROM 7 must be used.

Additional security may be provided by assigning a unique serial number to the software stored in the ROM 7 and the software stored in the store 3. This serial number is then used to code the data transferred between the main processor 2 and the processor 10. An example of such a serial number is:

10010011.

This serial numer is loaded in the store 3 and has been stored in the ROM 7 during manufacture of the device 5. Subsequently, when data is transferred, for example from the main processor 2 to the processor 10, it is firstly coded using a predetermined algorithm based on the serial number. An example of such an algorithm is the Exclusive-OR operation. Thus, if the data to be transferred is:

00000010

then the resultant data transferred after the Exclusive-OR operation will be:

10010001.

The processor 10 carries out a reverse operation to regenerate the original data so that the original program counter can be determined. When the processor 10 has carried out the required steps the output data and the new program counter will be coded in a similar way using the Exclusive-OR operation and the same serial number and then transferred to the main processor 2 which will carry out the reverse operation to regenerate the original data.

Alternatively, or in addition, dummy data may be transmitted between the main processor unit 1 and the device 5 to increase security against monitoring of the data transferred.

**Claims**

1. A device (5) for attachment to a main processor (2), the device comprising at least a store (7) for storing secure data essential for the correct action of a computer program, the store being arranged such that the secure data is unreadable by a user, and the secure data defining at least in part one or more steps of the computer program; a subsidiary processor (10) for carrying out the or each step defined by the secure data and responsive to a step selection signal from the main processor to carry out the selected step or steps; and interface means (6) for enabling data and step selection signals to be received by the device (5) from the main processor (2) and data to be transferred from the device (5) to the main processor (2) whereby the device and the main processor together enable the computer program to run.

2. A device according to claim 1, wherein the computer program can be arranged into a "top down" form, part of the top end of the program constituting the secure data which is stored.

3. A device according to any of the preceding claims, wherein the store (7) comprises a battery operated RAM.

4. A device according to any of the preceding claims, further comprising decoding means (9) for receiving from the main processor data and an associated program counter, the decoding means being arranged to select particular steps of the computer program defined by the secure data in accordance with the program counter.

5. A device according to claim 4, wherein a serial number is associated with the device, the decoding means (9) modifying data which is transferred to the main processor (2) in accordance with an algorithm stored in the device (5), using the serial number.

6. A device according to claim 5, wherein the algorithm is an Exclusive-OR operation.

7. A device according to any of the preceding claims wherein at least the store (7) and secure data and the subsidiary processor (10) are contained in a secure container.

8. A method for operating a main processor (2) connected to a device (5) the device comprising at least a store (7) for storing secure data essential for the correct action of a computer program, the store being arranged such that the secure data is unreadable by a user, and the secure data defining at least in part one or more steps of the computer program, the method comprising determining when a step in the computer program is to be found in the device (5); passing data and a program counter identifying the next step to the device (5); causing a subsidiary processor (10) in the device to carry out the step or steps indicated by the program counter on the transferred data; and passing resultant data and a new program counter to the main processor (2), the new program counter indicating the next step or steps of the computer program to be carried out by the main processor.

9. A method according to claim 8, wherein the data transferred between the device (5) and the main processor (2) includes dummy data.

**Patentansprüche**

1. Vorrichtung (5) zur Verbindung mit einem Hauptprozessor (2), wobei die Vorrichtung aufweist zumindest einen Speicher (7) zur Speicherung von Sicherheitsdaten, wesentlich für die richtige Arbeit eines Computerprogramms, wobei der Speicher so angeodnet ist, daß die Sicherheitsdaten für einen Benutzer unlesbar sind, und die Sicherheitsdaten zumindest teilweise einen oder mehrere Schritte des Computerprogramms bilden; einen Hilfsprozessor (10) zur Ausführung des oder jeden Schrittes, gebildet durch die Sicherheitsdaten und arbeitend in Abhängigkeit von einem Schritt-Auswahlsignal von dem Hauptprozessor, um den Ausgewählten Schritt oder die Schritte auszuführen; und eine Interface-Einrichtung (6), um zu ermöglichen, daß die Daten und die Schritt-Auswahlsignale durch die Vorrichtung (5) von dem Hauptprozessor (2) empfangen werden, und um zu ermöglichen, daß die Daten von der Vorrichtung (5) zu dem Hauptprozessor (2) übertragen werden, wodurch die Vorrichtung und der Hauptprozessor gemeinsam die Abarbeitung des Computerprogramms ermöglichen.

2. Vorrichtung nach Anspruch 1, bei der das Computerprogramm in einer "top down"-Form angeordnet werden kann, wobei ein Teil des Anfangsendes (top end) des Programms die Sicherheitsdaten bildet, die gespeichert sind.

3. Vorrichtung nach einem der vorhergehenden Ansprüche, bei der der Speicher (7) einen batteriebetriebenen RAM aufweist.

4. Vorrichtung nach einem der vorhergehenden Ansprüche, mit außerdem einer Decodiereinrichtung (9) zur Aufnahme von Daten von dem Hauptprozessor und einer zugehörigen Programmzählung, wobei die Decodiereinrichtung so angeordnet ist, daß sie spezielle Schritte des Computerprogramms, gebildet durch die Sicherheitsdaten, in Übereinstimmung mit der Programmzählung auswählt.

5. Vorrichtung nach Anspruch 4, bei der eine laufende Nummer mit der Vorrichtung verbunden ist, wobei die Decodiereinrichtung (9) Daten, die zu dem Hauptprozessor (2) übertragen werden, in Übereinstimmung mit einem Algorithmus, gespeichert in der Vorrichtung (5), unter Verwendung der laufenden Nummer modifiziert.

6. Vorrichtung nach Anspruch 5, bei der der Algorithmus ein exklusiver ODER-Vorgang ist.

7. Vorrichtung nach einem der vorhergehenden Ansprüche, wobei zumindest der Speicher (7) und die Sicherheitsdaten und der Hilfsprozessor (10) in einem Sicherheitsbehälter angeordnet sind.

8. Verfahren zur Bedienung eines Hauptprozessors (2), verbunden mit einer Vorrichtung (5), wobei die Vorrichtung zumindest einen Speicher (7) zur Speicherung von Sicherheitsdaten, wesentlich für die richtige Arbeitsweise eines Computerprogramms aufweist, wobei der Speicher so angeordnet ist, daß die Sicherheitsdaten für einen Benutzer unlesbar sind und die Sicherheitsdaten zumindest teilweise einen oder mehrere Schritte des Computerprogramms bilden, wobei das Verfahren aufweist: Bestimmen, wenn ein Schritt in dem Computerprogramm in der Vorrichtung (5) aufgefunden werden soll; Übergeben von Daten und einer Programmzählung, die den nächsten Schritt identifiziert, an die Vorrichtung (5); Veranlassen eines Hilfsprozessors (10) in der Vorrichtung, den Schritt oder die Schritte, die durch die Programmzählung an den übertragenen Daten bezeichnet sind, auszuführen; und Überführen der resultierenden Daten und einer neuen Programmzählung zum dem Hauptprozessor (2), wobei die neue Programmzählung den nächsten Schritt oder die nächsten Schritte des Computerprogramms angibt, die durch den Hauptprozessor ausgeführt werden sollen.

9. Verfahren nach Anspruch 8, wobei die Daten, die zwischen der Vorrichtung (5) und dem Hauptprozessor (2) übertragen werden, Scheindaten enthalten.

**Revendications**

1. Dispositif (5) pour une connexion à un processeur central (2), le dispositif comprenant au moins une mémoire (7) pour mémoriser des données sûres essentielles pour l'action correcte d'un programme d'ordinateur, la mémoire étant agencée pour que les données sûres soient illisibles par un utilisateur, et les données sûres définissant au moins en partie une ou plusieurs étapes du programme d'ordinateur; un processeur secondaire (10) pour exécuter la ou chaque étape définie par les données sûres et réagissant à un signal de sélection d'étape provenant du processeur central pour exécuter l'étape ou les étapes sélectionnées; et un moyen d'interface (6) pour valider la réception par le dispositif (5) des données et des signaux de sélection d'étape provenant du processeur central (2) et le transfert des données provenant du dispositif (5) jusqu'au precesseur central (2), le dispositif et le processeur central validant de la sorte ensemble le déroulement du programme d'ordinateur.

2. Dispositif selon la revendication 1, dans lequel le programme d'ordinateur peut être conçu sous une forme "descendante", une partie de l'extrémité du haut du programme constituant les données sûres qui sont mémorisées.

3. Dispositif selon l'une quelconque des revendications 1 et 2, dans lequel la mémoire (7) est constituée par une mémoire à accès sélectif rendue active par batterie.

4. Dispositif selon l'une quelconque des revendications 1 à 3, comprenant en outre un moyen de décodage (9) pour recevoir des données du processeur central et un compteur de programme associé, le moyen de décodage étant agencé pour sélectionner des étapes particulières du programme d'ordinateur définies par les données sûtre selon la compteur de programme.

5. Dispositif selon la revendication 4, dans lequel un numéro de série est associé au dispositif, le moyen de décodage (9) modifiant les données qui sont transférées au processeur central (2) selon un algorithme mémorisé dans le dispositif (5), en mettant en oeuvre le numéro de série.

6. Dispositif selon la revendication 5, dans lequel l'algorithme est une opération OU-exclusif.

7. Dispositif selon l'une quelconque des revendications 1 à 6, dans lequel au moins la mémoire (7) et les données sûres et le processeur secondaire (10) sont contenus dans un logement sûr.

8. Procédé pour faire fonctionner un processeur central (2) connecté à un dispositif (5), le dispositif comprenant au moins une mémoire (7) pour mémoriser des données sûres essentielles pour l'action correcte d'un programme d'ordinateur, la mémoire étant agencée pour que les données sûres soient illisibles par un utilisateur, et les données sûres définissant au moins en partie une ou plusieurs étapes du programme d'ordinateur, le procédé consistant à déterminer quand une étape du programme d'ordinateur doit être trouvée dans le dispositif (5); à faire passer des données et un compteur de programme identifiant l'étape suivante dans le dispositif (5); à faire en sorte qu'un processeur secondaire (10) inclus dans le dispositif exécute l'étape ou le étapes indiquées par le compteur de programme sur les données transférées; et à faire passer les données résultantes et un nouveau compteur de programme dans le processuer central (2), le nouveau compteur de programme indiquant l'étape ou les étapes suivantes du programme d'ordinateur à exécuter par le processeur central.

9. Procédé selon la revendivation 8, dans lequel les données transférées entre le dispositif (5) et le processeur central (2) comprennent des données fictives.

*Fig.1.*

*Fig.2.*

ADDRESS BUS AND
CONTROL LINES

ADDRESS
DECODER

DATA BUS

I/O    6        ROM    7        RAM    8

*Fig.3.*